# EUROPÄISCHE PATENTANMELDUNG

(11) **EP 4 480 692 A1**
(43) Veröffentlichungstag der Anmeldung: **25.12.2024**
(21) Anmeldenummer: 24180650.4
(22) Anmeldetag: 07.06.2024
(51) Int. Cl.: B31F 1/00, B31B 50/59, B31F 1/36, B31B 50/74, B27N 1/00, B27N 5/02, B29C 51/00, B29C 51/02, B31F 1/12, B29C 51/04, B29C 51/08, B29K 311/12, B29K 311/10

(54) **VERFAHREN ZUR VERARBEITUNG VON FLÄCHIGEN MATERIALBAHNEN AUS EINEM FASERHALTIGEN MATERIAL**

(30) Priorität: 16.06.2023 DE 102023115815
(71) Anmelder: KIEFEL GmbH, 83395 Freilassing (DE)
(72) Erfinder: Hausmann, Matthias, 5091 Unken (AT)
(74) Vertreter: DTS Patent- und Rechtsanwälte PartmbB

(57) **Zusammenfassung**

Es wird ein Verfahren zur Verarbeitung von flächigen Materialbahnen aus einem faserhaltigen Material, die als Materialbahnabschnitte oder endlose Materialbahn zugeführt werden, zur Herstellung dreidimensionaler Erzeugnisse beschrieben, wobei vor einem Verpressen einer Materialbahn zur Formgebung die Materialbahn dreidimensional vorgeformt wird, indem die Materialbahn in mindestens einer Richtung im Wesentlichen ohne ein Strecken oder Stauchen verformt wird.

## Beschreibung

### Technisches Gebiet

Es wird ein Verfahren zur Verarbeitung von flächigen Materialbahnen aus einem faserhaltigen Material, die als Materialbahnabschnitte oder endlose Materialbahn zugeführt werden, zur Herstellung dreidimensionaler Erzeugnisse beschrieben.

Es werden vermehrt Erzeugnisse für Lebensmittelverpackungen oder Konsumgüter aus einem faserhaltigen Material hergestellt. In letzter Zeit werden häufig papierartige Materialbahnen oder Materialbahnabschnitte einer Umformung unterzogen, wobei das Papier ähnlich einem Thermoformverfahren für Kunststoffe umgeformt wird. Das faserhaltige Material einer papierartigen Materialbahn kann natürliche Fasern oder künstliche Fasern umfassen, wobei in letzter Zeit vermehrt faserhaltiges Material verwendet wird, welches Naturfasern aufweist oder aus solchen besteht, die bspw. aus nachwachsenden Rohstoffen oder Altpapier gewonnen werden können.

### Hintergrund

Papierartige Materialbahnen können aufgrund ihrer Eigenschaften nur geringfügig umgeformt werden und damit keine großen Formtiefen aufweisen. Insbesondere kann papierartiges Material nur in einem sehr eingeschränkten Bereich gedehnt werden (2-5% bezogen auf das Ausgangsmaterial) und ist nicht fließfähig, was bspw. bei Herstellung von Erzeugnissen aus einem nassen Faserbrei ausgenutzt wird. Bei der Umformung von papierartigem Material kann es daher sehr leicht zu einer Schwächung und Beschädigung des Materials kommen (bspw. Reißen). Daher ist es bisher nur möglich sehr flache Erzeugnisse herzustellen, welche keine komplexen Geometrien aufweisen dürften.

### Aufgabe

Es besteht daher die Aufgabe darin eine Lösung zur Herstellung von dreidimensionalen Erzeugnissen aus einem faserhaltigen Material anzugeben, welche die Nachteile des Stands der Technik behebt und die Herstellung von dreidimensionalen Erzeugnissen aus faserhaltigem Material bereitstellt, welche im Wesentlichen keinen Einschränkungen hinsichtlich der Formtiefe und Produktgeometrie bei der Herstellung von dreidimensionalen Erzeugnissen aus einem papierartigen Material unterliegt.

### Lösung

Die vorstehend genannte Aufgabe wird durch ein Verfahren zur Verarbeitung von flächigen Materialbahnen aus einem faserhaltigen Material, die als Materialbahnabschnitte oder endlose Materialbahn zugeführt werden, zur Herstellung dreidimensionaler Erzeugnisse gelöst, wobei vor einem Verpressen einer Materialbahn zur Formgebung die Materialbahn dreidimensional vorgeformt wird, indem die Materialbahn in mindestens einer Richtung im Wesentlichen ohne ein Strecken oder Stauchen im Bereich des Erzeugnisses verformt wird.

Damit kann die Materialbahn durch die Vorformung bspw. eine Erhebung aufweisen, ohne dass das Material selbst unter Spannung steht. Es wird jedoch eine Ausrichtung des Materials erreicht, wodurch bspw. durch eine Erhebung eine Seitenwandfläche eines Erzeugnisses bereitgestellt wird. Weiter kann ein oberer Teil einen Bodenbereich eines herzustellenden Erzeugnisses darstellen. Die Erhebung kann sich bspw. umlaufend oder nur abschnittsweise von der ursprünglichen flächigen Ausrichtung der Materialbahn erstrecken. Nach der Vorformung kann beim Verpressen ein Presswerkzeug die vorgeformten Bereiche verpressen, wobei im Wesentlichen kein Verformen der Materialbahn erfolgen muss und damit nur eine sehr geringe Dehnung des Materials erfolgt. Damit werden bei gleichzeitiger Erhöhung der Produktvielfalt im Hinblick auf Formtiefe und Komplexität auch Beschädigungen ausgeschlossen.

In weiteren Ausführungen kann die Materialbahn während der dreidimensionalen Vorformung im Wesentlichen frei beweglich sein. Die Materialbahn kann in dem Bereich, der vorgeformt werden soll, durch eine von außen eingebrachte Bewegung erfolgen, ohne dass eine Dehnung des Materials eintritt. Die Bewegung kann bspw. durch ein Formwerkzeug oder einer Formhilfe (z.B. Stempel etc.) durchgeführt werden, wobei ein papierartiges Material in einen Hohlraum einer Kavität geschoben wird, ohne dass es dabei gedehnt wird.

In weiteren Ausführungen kann die Materialbahn in der Fläche seitlich zusammengeschoben werden.

In weiteren Ausführungen kann mindestens ein Bereich einer Materialbahn selektiv im Hinblick auf die Geometrie eines herzustellenden Erzeugnisses während der dreidimensionalen Vorformung in Bezug auf Lage und/oder Ausrichtung fixiert werden, so dass eine spannungsfreie Verformung in ausgewählten Bereichen erfolgt. Bereiche, die nicht vorgeformt werden sollen, können dabei gezielt bspw. durch ein Klemmen fixiert werden. Dadurch kann eine definierte Vorformung erreicht werden.

In weiteren Ausführungen kann mindestens ein Bereich einer Materialbahn selektiv im Hinblick auf die Geometrie eines herzustellenden Erzeugnisses vor und/oder während der dreidimensionalen Verformung durchtrennt werden. Bspw. kann ein Durchtrennen von Abschnitten einer Materialbahn erfolgen, welche benachbart zueinander sind und jeweils für die Herstellung eines Erzeugnisses dienen. Da das Material während des Vorformens nicht gedehnt sondern verlagert wird, könnte insbesondere bei Formwerkzeugen zum Vorformen mit mehreren Kavitäten Material aus benachbarten Abschnitten gezogen oder Material gespannt werden. Durch ein mindestens partielles Durchtrennen kann einer solchen ungewünschten Verlagerung des Materials entgegengewirkt werden.

In weiteren Ausführungen kann mindestens ein Bereich einer Materialbahn selektiv im Hinblick auf die Geometrie eines herzustellenden Erzeugnisses vor der dreidimensionalen Verformung befeuchtet und/oder einer Additivierung unterzogen werden. Ein Befeuchten unterstützt die Verformbarkeit insbesondere eines papierartigen Materials. Eine Additivierung kann neben einer Beeinflussung der Verformbarkeit auch weitere Eigenschaften (bspw. Barriere) in das Material und in ein fertiges Erzeugnis bringen.

In weiteren Ausführungen kann eine dreidimensionale Vorformung in mindestens zwei Vorformschritten erfolgen, wobei dadurch die Komplexität und Formtiefe von Erzeugnissen erheblich vergrößert wird.

In weiteren Ausführungen kann gleichzeitig eine dreidimensionale Verformung mehrerer Abschnitte einer Materialbahn für entsprechend mehrere Erzeugnisse stattfinden und die Abschnitte voneinander entkoppelt werden, so dass eine individuelle dreidimensionale Verformung der Abschnitte durchgeführt wird, wobei keine gegenseitige Beeinflussung der Abschnitte durch die jeweilige dreidimensionale Verformung auftritt. Hierzu kann bereichsweise ein Fixieren und/oder Durchtrennen eines Fasermaterials erfolgen.

Die Vorbehandlung des faserhaltigen Materials, welches als Rohstoff/Halbzeug der Herstellung von Erzeugnissen zugeführt wird, ermöglicht durch die spannungs-/dehnungsfreie Verformung sowie in weiteren Ausführungen durch ein Befeuchten des faserhaltigen Materials in auswählbaren Bereichen, Erzeugnisse mit großen Formtiefen, Rippen oder sonstigen Ausgestaltungen herzustellen, welche bisher aufgrund des trockenen Zustands des Ausgangsmaterials nicht erreicht werden konnten.

Die Vorformung kann direkt in einem Herstellungsprozess vor einer Weiterverarbeitung (z.B. Formgebung durch Verpressen mit hohem Druck/Temperatur) erfolgen.

In weiteren Ausführungen kann vor der Vorformung eine erzeugnisspezifische Vorbehandlung mit mindestens einer Temperatur-, Feuchtigkeits- und/oder Dampfbehandlung und/oder eine Additivierung des faserhaltigen Materials erfolgen. Die Behandlung kann bspw. durch Besprühen von Bereichen und/oder gezielte Erwärmung (bspw. mittels Infrarots oder Heizstempel) erfolgen. Weiterhin kann das faserhaltige Material bspw. innerhalb einer Kammer einem feuchten Klima ausgesetzt werden, wobei bspw. die Oberfläche des faserhaltigen Materials befeuchtet und/oder mit Additiven und Zusätzen versetzt wird. Mit einer optionalen oder zusätzlichen Temperaturbehandlung lassen sich damit die Eigenschaften des faserhaltigen Materials verbessern. Die Verbesserung der Eigenschaften des faserhaltigen Materials bezieht sich dabei in erster Linie auf Eigenschaften, welche maßgeblich für einen nachfolgenden Verarbeitungsschritt, wie bspw. einen Formprozess sind. Es können zusätzlich dazu auch Eigenschaften des finalen Erzeugnisses beeinflusst werden, wobei eine solche Behandlung häufig nach einem Formprozess stattfindet, da es durch ein Verformen bspw. zu einer Beschädigung einer vorab aufgebrachten Barriereschicht kommen kann.

In weiteren Ausführungen kann die Vorbehandlung mindestens einen Vorbehandlungsschritt aufweisen.

In weiteren Ausführungen kann eine selektive Vorbehandlung des faserhaltigen Materials erfolgen. Eine selektive Vorbehandlung, welche von der Produktgeometrie des herzustellenden Erzeugnisses abhängt, kann bspw. eine unterschiedliche Vorhandlung von Bereichen umfassen. Dabei kann bspw. zur Erreichung von homogenen Barriereeigenschaften für ein fertiges Erzeugnis eine ungleichmäßige Beschichtung bzw. Vorbehandlung erfolgen, so dass das finale Erzeugnis entsprechend der Umformung dennoch eine gleichmäßige Schichtdicke (z.B. Barriereschicht) aufweist. In weiteren Ausführungen kann eine Belegung von Bereichen mit hoher Feuchtigkeit (20-50%) erfolgen, wobei die Befeuchtung des gesamten Bereichs eines faserhaltigen Materials für ein Erzeugnis in Summe unter 20% bleibt, um Dampfexplosionen im Formprozess zu vermeiden.

In weiteren Ausführungen können während der selektiven Vorbehandlung nur Bereiche vorbehandelt werden, welche in einem nachgelagerten Prozessschritt verformt werden, so dass eine gleichmäßige Produktqualität und Eigenschaften eines fertigen Erzeugnisses erreicht werden können.

In weiteren Ausführungen kann die Vorbehandlung mindestens von einer Seite auf die Oberfläche des faserhaltigen Materials erfolgen. Das faserhaltige Material wir in der Regel in einer Transportrichtung durch die Vorbehandlung geführt und weist dabei bspw. eine Unterseite und eine Oberseite auf. Hierbei kann dann die Vorbehandlung bspw. nur auf eine Unterseite oder eine Oberseite einwirken. In weiteren Ausführungen kann auch eine Vorbehandlung auf die Unterseite und die Oberseite erfolgen. In weiteren Ausführungen kann die Vorbehandlung einer Oberseite und einer Unterseite abwechselnd erfolgen.

In weiteren Ausführungen kann die Vorbehandlung in mehreren Vorbehandlungsschritten erfolgen, wobei in den Vorbehandlungsschritten verschiedene Vorbehandlungen durchgeführt werden können, die je nach Anforderung in ihrer Abfolge aufeinander abgestimmt sind oder in beliebiger Reihenfolge stattfinden können.

In weiteren Ausführungen kann die Vorbehandlung innerhalb einer Vorbehandlungskammer erfolgen, in welcher das faserhaltige Material gegenüber äußeren Einflüssen mindestens temporär geschützt wird. Eine solche Vorbehandlung kann bspw. eingesetzt werden, um spezielle Vorbehandlungen in einer Atmosphäre (Druck, Temperatur, (Luft-)Feuchtigkeit) durchzuführen, welche sich von der Atmosphäre des Herstellungsprozesses bzw. eines Herstellungsortes unterscheidet. Für eine temporäre Entkopplung des Inneren einer Vorbehandlungskammer können entsprechende Mittel vorgesehen sein, wie bspw. verlagerbare Klappen oder dergleichen.

In weiteren Ausführungen können in mindestens einem Abschnitt der Vorbehandlungskammer gegenüber der Umgebung der Vorbehandlungskammer unterschiedliche Eigenschaften vorherrschen, wobei die Eigenschaften den Druck, die Temperatur und/oder Feuchtigkeit umfassen.

In weiteren Ausführungen können über weitere Einrichtungen (Sensoren, Kameras, etc.) die Qualität und das Erscheinungsbild bzw. die Eigenschaften von Erzeugnissen geprüft und bewertet werden. Werden Abweichungen von einem Sollwert festgestellt, kann über eine Steuerung direkt eine Anpassung und Veränderung von Prozessparametern der Vorbehandlung erfolgen, wobei bspw. Bereiche stärker oder schwächer befeuchtet werden und/oder eine lokale Anpassung (z.B. durch Veränderung der Ausrichtung von Düsen etc.) der zu befeuchtenden Bereiche des faserhaltigen Materials erfolgen. In weiteren Ausführungen kann auch die Temperatur und/oder die Durchlaufgeschwindigkeit während der Vorbehandlung angepasst werden.

In weiteren Ausführungen können eine erste Vorformung und/oder erste Vorbehandlung vor einem ersten Weiterverarbeitungsschritt erfolgen, wobei anschließend mindestens eine zweite Vorformung und/oder Vorbehandlung vor mindestens einem zweiten Weiterverarbeitungsschritt erfolgt. Bspw. kann zunächst eine Vorformung erfolgen, wobei Bereiche von faserhaltigem Material ohne Dehnung verformt werden und hierzu einer optionalen Vorbehandlung (z.B. Befeuchtung) unterzogen werden, die anschließend vorgeformt werden. Danach erfolgt ein weiteres Vorformen von Bereichen, die schließlich in einer finalen zweiten Formstation final umgeformt werden. Die stufenweise Vorformung und/oder Vorbehandlung erfolgt damit stets unmittelbar vor dem jeweiligen Weiterverarbeitungsschritt bzw. Formprozess, so dass die Eigenschaften des faserhaltigen Materials gezielt für die nächste Verarbeitung beeinflusst werden können.

Weitere Merkmale, Ausgestaltungen und Vorteile ergeben sich aus der nachfolgenden Darstellung von Ausführungsbeispielen mit Bezug auf die Figuren.

### Kurzbeschreibung der Figuren

In den Zeichnungen zeigt:
- Fig. 1: schematische Darstellungen eines Ablaufs zum Vorformen einer Materialbahn aus einem faserhaltigen Material;
- Fig. 2: schematische Darstellungen eines Ablaufs zum Vorformen einer Materialbahn aus einem faserhaltigen Material;
- Fig. 3: schematische Darstellungen einer vorgeformten Materialbahn; und
- Fig. 4: eine schematische Darstellung einer Faserformanlage zur Herstellung von dreidimensionalen Erzeugnissen aus einem faserhaltigen Material.

### Detaillierte Beschreibung von Ausführungsbeispielen

Nachfolgend werden mit Bezug auf die Figuren Ausführungsbeispiele der hierin beschriebenen technischen Lehre dargestellt. Für gleiche Komponenten, Teile und Abläufe werden in der Figurenbeschreibung gleiche Bezugszeichen verwendet. Für die hierin offenbarte technische Lehre unwesentliche oder für einen Fachmann sich erschließende Komponenten, Teile und Abläufe werden nicht explizit wiedergegeben. Im Singular angegebene Merkmale sind auch im Plural mitumfasst, sofern nicht explizit etwas anderes ausgeführt ist. Dies betrifft insbesondere Angaben wie "ein" oder "eine".

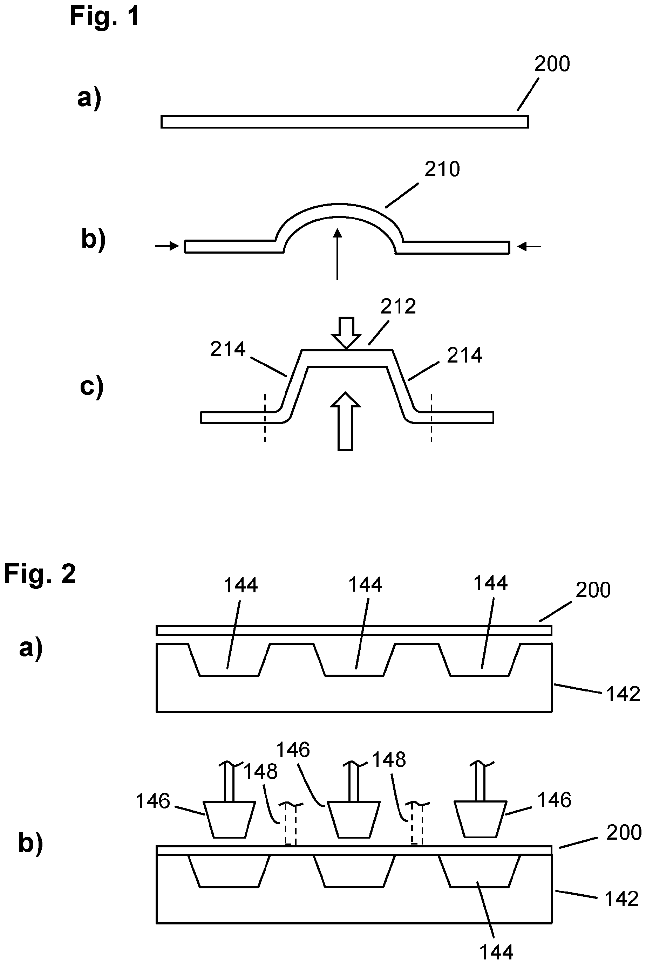

Fig. 1 zeigt schematische Darstellungen eines Ablaufs zum Vorformen einer Materialbahn aus einem faserhaltigen Material.

In Fig. 1 ist schematisch ein Materialbahnabschnitt 200 aus einer papierartigen Materialbahn gezeigt, die aus einem faserhaltigen Material besteht (bspw. natürliche Fasern) und Zusätze aufweisen kann. Die Höhe des Materialbahnabschnitts 200 ist dabei wie bei normalem Papier verhältnismäßig gering. Kann in weiteren Ausführungen aber höher sein wie bei normalem Papier. Das Material des Materialbahnabschnitts 200 weist einen verhältnismäßig geringen Feuchtigkeitsanteil von 6-10 Gew.-% auf.

Fig. 1b) zeigt den Materialbahnabschnitt 200 bei einem Vorformschritt, wobei hier wie durch die Pfeile angedeutet, der Materialbahnabschnitt 200 seitlich und/oder von unten verformt wird, so dass sich eine Materialanhäufung in der Mitte ergibt. Dort bildet der Materialbahnabschnitt 200 eine Erhebung 210 aus. Es sei angemerkt, dass dabei die flächige Erstreckung abnimmt, weil das Material des Materialbahnabschnitts 200 in die Mitte geschoben wird. Es tritt dabei im Wesentlichen kein Dehnen des Materials auf, so dass der Materialbahnabschnitt 200 nicht einreißt oder anderweitig beschädigt wird. Die Vorformung kann unter Verwendung von Hilfsmitteln und/oder eines Formwerkzeugs erfolgen.

Fig. 1a) zeigt den Materialbahnabschnitt 200 bei einem finalen Formschritt, wobei unter hohem Druck (spezifische Flächenpressung 100 bis 5.000 N/cm²) und hohen Temperaturen (20 bis 250 °C) der vorgeformte Bereich des Materialbahnabschnitts 200 verpresst wird, wobei steile Seitenwände 214 aus einem papierartigen Material hergestellt werden können, ohne dass es zu einer Beschädigung des Materials aufgrund der großen Formtiefe kommt.

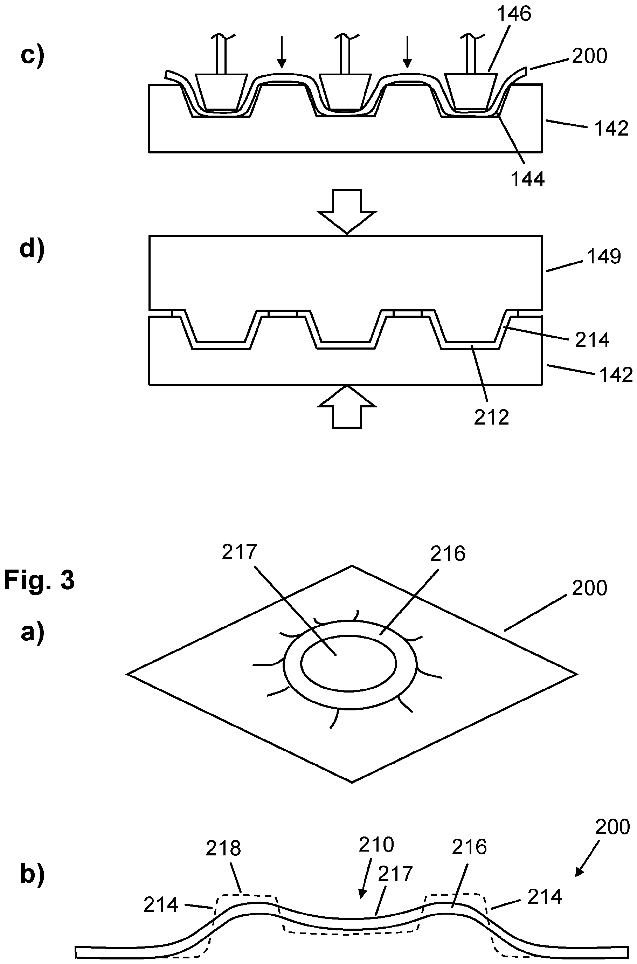

Fig. 2 zeigt schematische Darstellungen eines Ablaufs zum Vorformen einer Materialbahn aus einem faserhaltigen Material. Hier wird ein Materialbahnabschnitt 200 einem Formwerkzeug 140 zugeführt, das mehrere Kavitäten 144 aufweist. Je nach Ausführung können die Kavitäten 144 entweder die finale Form eines herzustellenden Erzeugnisses oder eines vorgeformten Vorformlings aufweisen. Bei letzterem kann das Material vollständig gegen eine korrespondierende Oberfläche gedrückt werden, wobei eine ansonsten im Stand der Technik auftretende Dehnung des Materials dadurch ausgeglichen werden kann, dass das Material von außen seitlich in die Kavität 144 gezogen werden kann, so dass es trotz der Verformung nicht zu einer Dehnung des Materials selbst kommt. Insbesondere wird erreicht, dass das Material bereichsweise verlagert anstatt gedehnt wird. Das Material des Materialbahnabschnitts 200 ist damit im Wesentlichen frei beweglich.

In einem nachfolgenden Schritt (Fig. 2b) wird der Materialbahnabschnitt 200 über Vorformstempel 146 nach unten gedrückt. Es können zusätzlich Schneideinrichtungen 148 zu Einsatz kommen, welche die den Kavitäten 144 zugeordneten Bereiche des Materialbahnabschnitts 200 zwischen den Kavitäten 144 durchtrennen, so dass ein Nachrutschen des Materials in die Kavitäten 144 während des Vorformens auftreten kann, ohne dass eine gegenseitige Beeinflussung stattfindet.

Wie in Fig. 2c gezeigt, kann zusätzlich oder alternativ zumindest in den im Beispiel gezeigten Bereichen zwischen den Kavitäten 144 ein Klemmen bzw. Fixieren des Materialbahnabschnitts 200 erfolgen, um eine gegenseitige Beeinflussung zu vermeiden. Das Klemmen kann in weiteren Ausführungen in Kombination mit einem Durchtrennen erfolgen. In weiteren Ausführungen kann über die Vorformstempel 146 das Material des Materialbahnabschnitts 200 im Bereich der Bodenfläche einer Kavität 144 ebenfalls fixiert werden, um einen Boden 212 für ein Erzeugnis bereits ausreichend vorzuformen und um zu verhindern, dass Material aus dem Bereich des Bodens in Richtung der Seitenwandabschnitte gezogen wird.

Nach dem Vorformen werden zwischen den Werkzeughälften 142 und 149 die vorgeformten Abschnitte in den Kavitäten 144 zu finalen Erzeugnissen verpresst.

In weiteren Ausführungen kann zusätzlich vor dem Vorformen ein selektives Befeuchten von Bereichen des Materialbahnabschnitts 200 erfolgen, um dadurch die Vorformung zu unterstützen oder zu erleichtern.

Fig. 3 zeigt schematische Darstellungen einer vorgeformten Materialbahn. In Fig. 3a ist ein bereits vorgeformter Materialbahnabschnitt 200 dargestellt, der in der Mitte eine Mulde 217 und einen die Mulde 217 umgebenden vorgeformten Ring 216 aufweist.

Fig. 3b zeigt einen Schnitt durch den Materialbahnabschnitt 200 von Fig. 3a mit der Ausbildung der vorgeformten Bereiche und die finale Form nach einem Verpressen (gestrichelt). Das Vorformen kann unter Verwendung von zwei Formwerkzeughälften erfolgen, die den Materialbahnabschnitt 200 gegen korrespondierende Formflächen drücken, ohne dass dabei eine wesentliche Dehnung stattfindet. Es kann durch eine entsprechende Werkzeuggestaltung erreicht werden, dass ein "Nachrutschen" von Material in eine Kavität erfolgen kann.

Durch die Vorformung kann in einem nachfolgenden Pressschritt das papierartige Material einfach in die finale Form gebracht werden, wie in der gestrichelten Ausführung gezeigt, da das Material zwischen der Orientierung und Formgebung durch das Vorformen und der finalen Form nur noch geringfügig verformt und damit gedehnt wird bzw. werden muss. Somit lassen sich komplexe Geometrien und große Formtiefen bei papierartigen Materialien ohne Beschädigung und aufwendige Behandlungen erzielen.

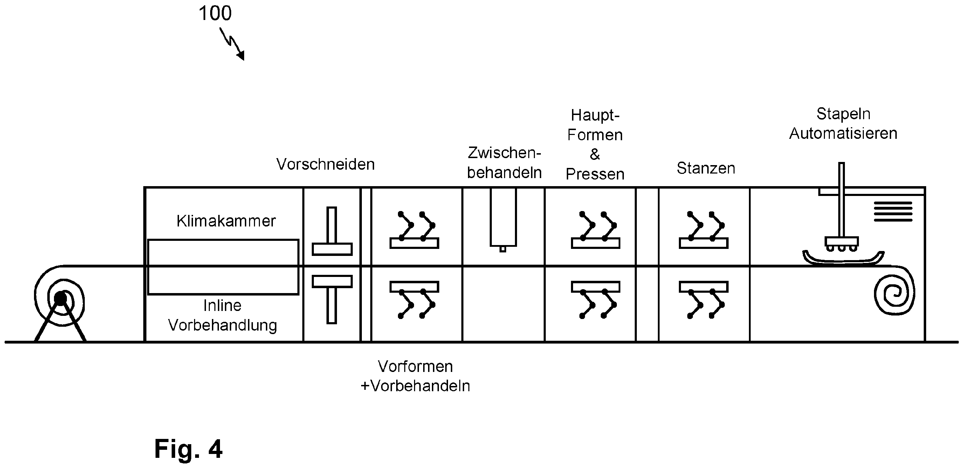

Fig. 4 zeigt eine schematische Darstellung einer Faserformanlage 100 zur Herstellung von dreidimensionalen Erzeugnissen aus einem faserhaltigen Material. Hierzu können einzelne Materialbahnabschnitte 200 oder ein Materialbahn von einer Rolle oder einer anderen Zuführeinrichtung, wie in Fig. 4 gezeigt, zugeführt werden.

Mit der Faserformanlage 100 lassen sich Erzeugnisse herstellen, die biologisch abbaubar sind und selbst wieder als Ausgangsmaterial für die Herstellung von dreidimensionalen Erzeugnissen aus einem faserhaltigen Material dienen und kompostiert werden können, weil diese in der Regel vollständig zersetzt werden können und keine bedenklichen, umweltgefährdenden Stoffe enthalten. Die Erzeugnisse können bspw. als Becher, Deckel, Schalen, Kapseln, Teller und weitere Form- und/oder Verpackungsteile (bspw. als Halter-/Stützstrukturen für elektronische oder andere Geräte) ausgebildet sein.

Die Faserformanlage 100 weist in dem exemplarischen Ausführungsbeispiel eine Zuführung auf. Die Zuführung kann, wie schematisch angedeutet, auch eine Transporteinrichtung aufweisen, welche zum Transport einer Materialbahn oder Bahnabschnitten dient. Die Transporteinrichtung kann verschiedenartig ausgeführt sein. Die Materialbahn durchläuft eine Vorbehandlungskammer und wird dabei einer Vorbehandlung unterzogen. In der Vorbehandlung werden Eigenschaften der Materialbahn erzeugnisspezifisch selektiv beeinflusst, um eine direkt anschließende Vorformung und/oder Formgebung zu unterstützen bzw. zu ermöglichen. Anschließend kann ein Vorschneiden erfolgen. Danach erfolgten ein Vorformen und ein optionales Vorbehandeln. Danach kann ein Zwischenbehandeln erfolgen. Danach erfolgt eine finale Formgebung. Anschließend können die fertigen Erzeugnisse über eine Stanze vom restlichen Material getrennt und danach einer Stapel- und/oder Automatisierungsstation zugeführt werden.

Der Vorschub der Materialbahn kann über die Zuführeinrichtung kontinuierlich fortlaufend oder getaktet erfolgen. Die Vorbehandlung und die Formgebung erfolgen im gezeigten Ausführungsbeispiel in einer Vorschubpause. Zur Gewährleistung eines fortlaufenden Abrollens der Materialbahn können Einrichtungen zum Längenausgleich vorgesehen sein, wie sie bspw. bei Thermoformanlagen für Kunststofffolien bekannt sind. Die Faserformanlage 100 kann weitere Stationen und Einrichtungen aufweisen. Bspw. kann ein Vorrat für faserhaltiges Material vorgesehen sein.

Die Vorbehandlungskammer (Klimakammer) kann ein Gehäuse aufweisen, welches den Raum umgibt, in dem die Vorbehandlung stattfindet. Eingangsseitig und ausgangsseitig weist die Vorbehandlungskammer einen Durchgang auf, der in weiteren Ausführungen verschlossen werden kann. Damit kann der Raum innerhalb der Vorbehandlungskammer gegenüber seiner Umgebung im Wesentlichen abgedichtet bzw. entkoppelt werden, so dass innerhalb der Vorbehandlungskammer andere Zustände (Temperatur, Feuchtigkeit, Druck) mindestens temporär vorherrschen können.

Eine optionale Nachbearbeitung der hergestellten Erzeugnisse kann bspw. ein Bedrucken, Färben, Befüllen, Stapeln, etc. umfassen.

Für die Steuerung der Herstellungsschritte und der Vorbehandlung weist die Faserformanlage 100 zudem mindestens eine Steuerung auf, welche in weiteren Ausführungen mit mindestens einer Überwachungseinrichtung (z.B. Kamera, Sensoren, etc.) in Verbindung steht, um die Vorformung, Befeuchtung von Bereichen des faserhaltigen Materials und die Vorbehandlung anzupassen und zu regeln.

Darüber hinaus können in einem zweistufigen Form- bzw. Pressverfahren die Oberflächenausbildung und die Eigenschaften des herzustellenden Erzeugnisses wesentlich beeinflusst und verbessert werden. Bspw. kann nach einem ersten Formschritt ein erneutes Befeuchten, bspw. des gesamten Erzeugnisses, ein Nachverpressen mit verändertem Druck und/oder Temperatur erfolgen.

Bisher war das Formen von flächigen Materialbahnen aus einem faserhaltigen Material, wie bspw. trockenem Papier (Karton, Spezialpapier, Airlaid, Compressed Airlaid, Non Woven) aus Naturfasern limitiert durch die Dehnungsfähigkeit (2-10%) und/oder dem Materialfluss in die Formgeometrie (Falten- oder Rissbildung). Dadurch waren bisher nur einfache Produktgeometrien ("falsche" Schalen oder Teller) für aus solchen Materialien hergestellte Erzeugnisse möglich.

Anstatt sehr komplexe, teure Papiere oder Prozessvorbereitungen einer oder mehrerer Papierlagen für höhere Formgrade zu verwenden bzw. vorzusehen, erfolgt bei der hierin beschriebenen technischen Lehre in mindestens einem Prozessschritt eine "Materialanhäufung" des erforderlichen Materials in speziellen Geometriebereichen, um final an dieser Stelle des Produktes bzw. Erzeugnisses hohe Verformungsgrade zu erreichen (z.B. Hinterschnitt, scharfer Radius, Rippe im Inneren, etc.).

Zur Realisierung der Vorformung bei Mehrfachkavitäten-Werkzeugen, kann ein entsprechendes System mit Einrichtungen zum Vorschneiden und Niederhalten mit den Einrichtungen zum Vorformen sowie beim Endformen kombiniert werden, damit der Materialfluss gezielt gesteuert und kontrolliert werden kann. Zudem wird dadurch eine gegenseitige Beeinflussung der Kavitäten unterbunden. In weiteren Ausführungen kann dieser Prozess mittels gezielter Feuchte (feuchtes Papier oder Aufsprühen von Wasser kurz vor dem Formen) und Wärmeeinbringung (heißes Werkzeug) unterstütz und vereinfacht werden. Somit kann mit verfügbaren Papieren (siehe oben) das Produktspektrum deutlich erhöht werden, um bspw. SipLids, Deckel mit festem Sitz, Teller, Trays oder Clam Shells mit Segmenten, steile (<15°) Formschrägen und kleine Radien am Boden (<10mm) herzustellen. Weiterhin können damit die Tiefziehraten signifikant erhöht werden (>20mm).

### Bezugszeichenliste

- 100: Faserformanlage
- 140: Formwerkzeug
- 142: Werkzeughälfte
- 144: Kavität
- 146: Vorformstempel
- 148: Schneideinrichtung
- 149: Werkzeughälfte
- 200: Materialbahnabschnitt
- 210: Erhebung
- 212: Boden
- 214: (endgeformte) Seitenwand
- 216: vorgeformter Ring
- 217: (vorgeformte) Mulde
- 218: (endgeformter) Rand

## Patentansprüche

1. Verfahren zur Verarbeitung von flächigen Materialbahnen aus einem faserhaltigen Material, die als Materialbahnabschnitte oder endlose Materialbahn zugeführt werden, zur Herstellung dreidimensionaler Erzeugnisse, wobei vor einem Verpressen einer Materialbahn zur Formgebung die Materialbahn dreidimensional vorgeformt wird, indem die Materialbahn in mindestens einer Richtung im Wesentlichen ohne ein Strecken oder Stauchen im Bereich des Erzeugnisses verformt wird.

2. Verfahren nach Anspruch 1, wobei die Materialbahn während der dreidimensionalen Vorformung im Wesentlichen frei beweglich ist.

3. Verfahren nach Anspruch 1 oder 2, wobei die Materialbahn in der Fläche seitlich zusammengeschoben wird.

4. Verfahren nach einem der Ansprüche 1 bis 3, wobei mindestens ein Bereich einer Materialbahn selektiv im Hinblick auf die Geometrie eines herzustellenden Erzeugnisses während der dreidimensionalen Vorformung in Bezug auf Lage und/oder Ausrichtung fixiert wird.

5. Verfahren nach einem der Ansprüche 1 bis 4, wobei mindestens ein Bereich einer Materialbahn selektiv im Hinblick auf die Geometrie eines herzustellenden Erzeugnisses vor und/oder während der dreidimensionalen Verformung durchtrennt wird.

6. Verfahren nach einem der Ansprüche 1 bis 5, wobei mindestens ein Bereich einer Materialbahn selektiv im Hinblick auf die Geometrie eines herzustellenden Erzeugnisses vor der dreidimensionalen Verformung befeuchtet und/oder einer Additivierung unterzogen wird.

7. Verfahren nach einem der Ansprüche 1 bis 6, wobei eine dreidimensionale Vorformung in mindestens zwei Vorformschritten erfolgt.

8. Verfahren nach einem der Ansprüche 1 bis 7, wobei gleichzeitig eine dreidimensionale Verformung mehrerer Abschnitte einer Materialbahn für entsprechend mehrere Erzeugnisse stattfindet und die Abschnitte voneinander entkoppelt werden, so dass eine individuelle dreidimensionale Verformung der Abschnitte durchgeführt wird, wobei keine gegenseitige Beeinflussung der Abschnitte durch die jeweilige dreidimensionale Verformung auftritt.
